# EUROPEAN PATENT APPLICATION

(11) **EP 4 783 342 A1**
(43) Date of publication of application: **29.07.2026**
(21) Application number: 25867275.7
(22) Date of filing: 17.07.2025
(51) Int. Cl.: H01M 50/383, H01M 50/204, F16B 7/18

(54) **BATTERY MODULE AND BATTERY PACK COMPRISING SAME**

(30) Priority: 06.12.2024 KR 20240180953
(71) Applicant: LG ENERGY SOLUTION, LTD., Seoul 07335 (KR)
(72) Inventor: LEE, Hyun Jun, Daejeon 34122 (KR); HEO, Sam Hoe, Daejeon 34122 (KR); KIM, Hyeon Jae, Daejeon 34122 (KR)
(74) Representative: Plasseraud IP
(86) International application number: PCT/KR2025/010576
(87) International publication number: WO 2026/121454

(57) **Abstract**

The present disclosure relates to a battery module and a battery pack including the same, and more particularly, to a battery module for preventing the spread of gases and/or flames to other battery cells when the gases and/or flames are produced from a specific battery cell and a battery pack including the same. The battery module according to the present disclosure includes a first cell unit, a second cell unit spaced apart from the first cell unit in a first direction, a first side beam covering an end of the first cell unit in a second direction perpendicular to the first direction, and a second side beam coupled to the first side beam, the second side beam covering an end of the second cell unit in the second direction, and at least a part of the first side beam and at least a part of the second side beam may overlap each other in the second direction.

## Description

### TECHNICAL FIELD

### CROSS-REFERENCE TO RELATED APPLICATIONS

This application is based on and claims priority from Korean Patent Application No. 10-2024-0180953 filed on December 6, 2024 with the Korean Intellectual Property Office, the disclosure of which is incorporated herein in its entirety by reference.

### TECHNICAL FIELD

The present disclosure relates to a battery module and a battery pack including the same, and more particularly, to a battery module for preventing the spread of gases and/or flames to other battery cells when the gases and/or flames are produced from a specific battery cell and a battery pack including the same.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Batteries that store electrical energy may be generally classified into primary batteries and secondary batteries. The primary batteries are disposable batteries designed to be used once, whereas the secondary batteries are rechargeable batteries manufactured using materials in which oxidation and reduction are repeated between electric currents and the materials. That is, when reduction reactions occur in the materials by electric currents, charging proceeds, and when oxidation reactions occur in the materials, discharging proceeds, and charging and discharging are repeatedly performed to produce electricity.

More recently, as secondary batteries are used in devices requiring high voltage and large charging capacity such as electric vehicles and energy storage systems (ESSs), battery modules formed by connecting a plurality of battery cells either in series or in parallel or both and battery packs formed by connecting battery modules either in series or in parallel or both are being widely used.

As described above, because the battery cells or battery modules included the battery packs are placed in narrow spaces to increase energy density, it is necessary to properly manage them to prevent overheating or thermal runaway.

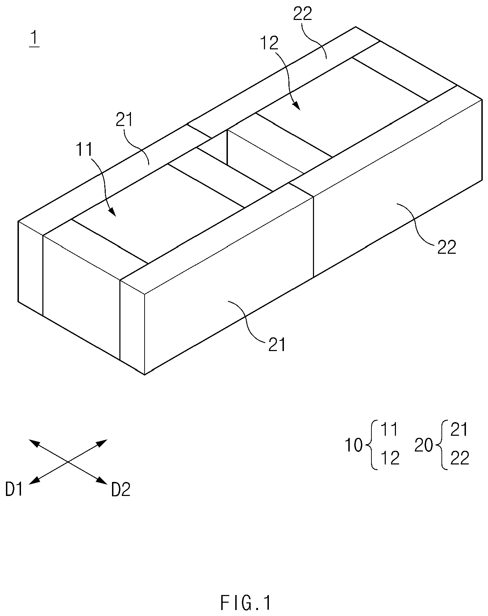

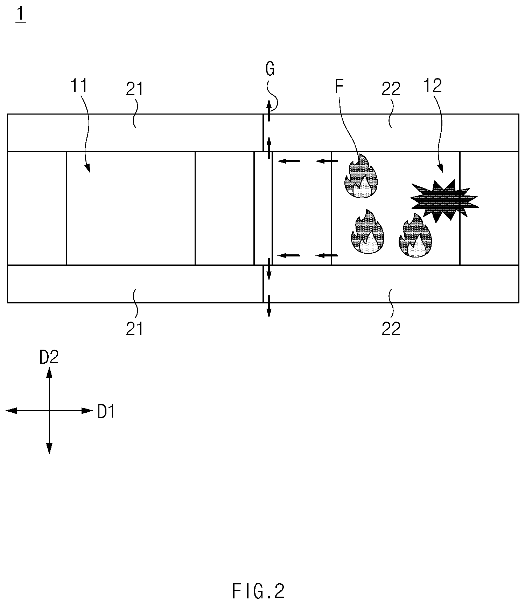

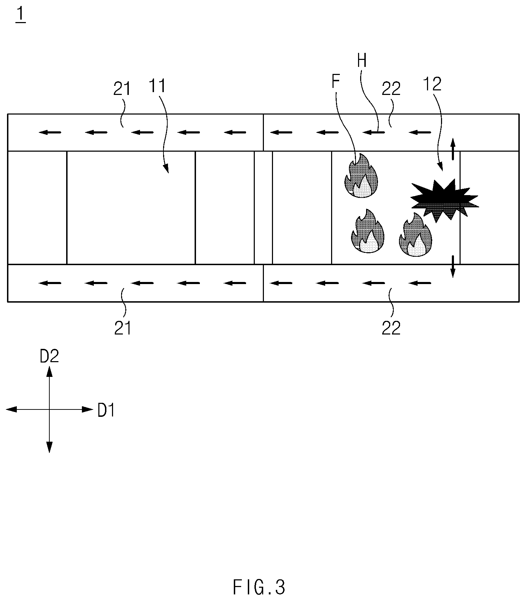

FIG. 1 is a perspective view of a conventional battery module, FIG. 2 is a plan view illustrating that gas from a fire leaks between a first side beam and a second side beam when the fire occurs in a second battery cell of the conventional battery module, and FIG. 3 is a plan view illustrating that heat transferred from the second battery cell to the second side beam is transferred to the adjacent first side beam when the fire occurs in the second battery cell of the conventional battery module.

Referring to FIGS. 1 to 3, the conventional battery module 1 includes a cell unit 10 and a side beam 20.

Specifically, the cell unit 10 includes a first battery cell 11 and a second battery cell 12 spaced apart from the first battery cell 11 in a first direction D1, and the side beam 20 includes a first side beam 21 covering two ends of the first battery cell 11 in a second direction D2 and a second side beam 22 covering two ends of the second battery cell 12 in the second direction D2.

In this instance, as shown in FIG. 2, in the conventional battery module 1, when a fire F occurs in the first battery cell 11 and/or the second battery cell 12, gas G from the fire F leaks through a gap between the first side beam 21 and the second side beam 22, and the high temperature gas G spreads to other battery cells beyond the side beam 20.

In addition, as shown in FIG. 3, in the conventional battery module 1, when the fire F occurs in the second battery cell 12, heat H from the fire F is transferred to the first side beam 21 along the second side beam 22, and the high temperature heat spreads to battery cells other than the second battery cell 12.

### DISCLOSURE

### TECHNICAL PROBLEM

The present disclosure is designed to solve the above-described problems, and therefore the present disclosure is directed to providing a battery module for preventing the spread of gases and/or flames to other battery cells when the gases and/or flames are produced from a specific battery cell and a battery pack including the same.

### TECHNICAL SOLUTION

To solve the above-described problems, a battery module according to the present disclosure includes a first cell unit, a second cell unit spaced apart from the first cell unit in a first direction, a first side beam covering an end of the first cell unit in a second direction perpendicular to the first direction, and a second side beam coupled to the first side beam, the second side beam covering an end of the second cell unit in the second direction, and at least a part of the first side beam and at least a part of the second side beam may overlap each other in the second direction.

The first side beam may include a first beam member disposed at the end of the first cell unit in the second direction, and a first protruding member extending from the first beam member in the first direction, the second side beam may include a second beam member disposed at the end of the second cell unit in the second direction, and a second protruding member extending from the second beam member in the first direction, and the first protruding member and the second protruding member may overlap each other in the second direction.

The first protruding member and the second protruding member may be coupled by bolting.

Any one of the first protruding member or the second protruding member may have a fastening hole through which a bolt passes, and the other may have a fastening groove into which the bolt is inserted, and a direction in which the bolt passes and gets inserted may be the second direction.

A space may be formed between the first cell unit and the second cell unit, and an end of the first protruding member or the second protruding member in the first direction covering the space may overlap the second cell unit or the first cell unit in the second direction.

The first side beam and the second side beam may have complementary structures that fit together.

The end of the first protruding member in the first direction may have a shape that conforms to the end of the second beam member in the first direction facing the first protruding member, and the end of the second protruding member in the first direction may have a shape that conforms to the end of the first beam member in the first direction facing the second protruding member.

An end of the first protruding member in the second direction may have a shape that conforms to an end of the second protruding member in the second direction facing the first protruding member.

The first beam member and the second beam member may be arranged side by side in the first direction, and the first protruding member and the second protruding member may be arranged side by side in the second direction.

The first side beam and the second side beam may be L-shaped.

The first side beam may have a first contact surface facing the second side beam, the second side beam may have a second contact surface that contacts the first contact surface, any one of the first contact surface or the second contact surface may include a heat-resistant material, and the other may include an adhesive material.

The first contact surface and the second contact surface may be bent at least once.

The first cell unit may include a first battery cell, and a first end plate coupled to each of two ends of the first battery cell in the first direction, and the first side beam may be coupled to each of two ends of the first end plate in the second direction.

The second cell unit may include a second battery cell, and a second end plate coupled to each of two ends of the second battery cell in the first direction, and the second side beam may be coupled to each of two ends of the second end plate in the second direction.

To solve the above-described problems, a battery pack according to the present disclosure may include the battery module according to the present disclosure.

### ADVANTAGEOUS EFFECTS

The battery module according to the present disclosure and the battery pack including the same have an effect of preventing the spread of gases and/or flames to other battery cells when the gases and/or flames are produced from a specific battery cell.

### BRIEF DESCRIPTION OF THE DRAWINGS

FIG. 1 is a perspective view of a conventional battery module.
FIG. 2 is a plan view illustrating that gas from a fire leaks between a first side beam and a second side beam when the fire occurs in a second battery cell of the conventional battery module.
FIG. 3 is a plan view illustrating that heat transferred from the second battery cell to the second side beam is transferred to the adjacent first side beam when the fire occurs in the second battery cell of the conventional battery module.
FIG. 4 is a perspective view of a battery module according to the present disclosure.
FIG. 5 is a plan view of the battery module according to the present disclosure.
FIG. 6 is an enlarged view of section A in FIG. 5.
FIG. 7 is a plan view illustrating a coupling process of a first side beam and a second side beam of the battery module according to the present disclosure.
FIG. 8 is an enlarged view of section B in FIG. 7.
FIG. 9 is a plan view illustrating the fully coupled first and second side beams of the battery module according to the present disclosure.
FIG. 10 is an enlarged view of section C in FIG. 9.
FIG. 11 is a plan view illustrating that gas from the fire is blocked by the second side beam to prevent the gas from moving when the fire occurs in the second battery cell of the battery module according to the present disclosure.
FIG. 12 is a perspective view illustrating that the gas blocked by the second side beam in FIG. 11 is released through an opening.
FIG. 13 is a plan view illustrating that heat transferred from the second battery cell to the second side beam is not transferred to the first side beam by a contact surface including a heat-resistant material when the fire occurs in the second battery cell of the battery module according to the present disclosure.
FIG. 14 is a perspective view of a battery pack according to the present disclosure.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

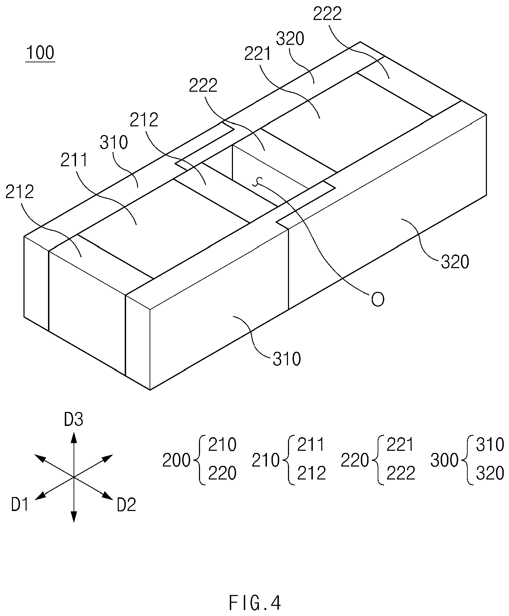

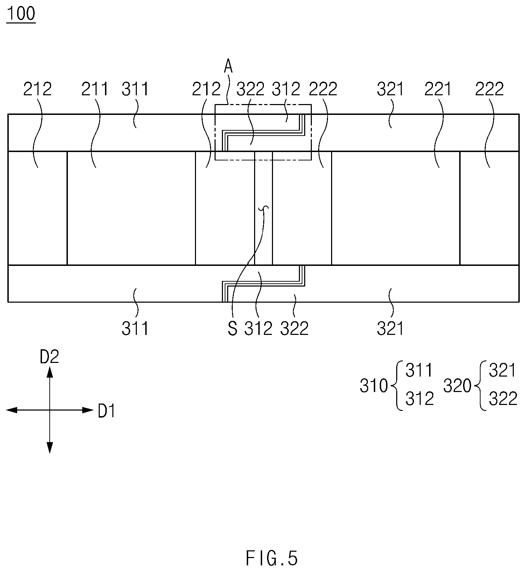

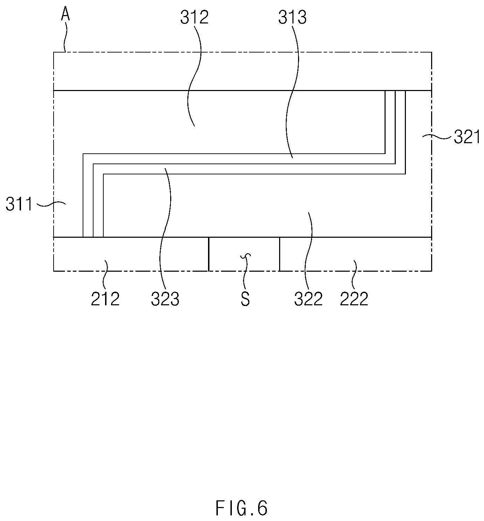

FIG. 4 is a perspective view of a battery module according to the present disclosure, FIG. 5 is a plan view of the battery module according to the present disclosure, and FIG. 6 is an enlarged view of section A in FIG. 5.

Referring to FIGS. 4 to 6, the battery module 100 according to the present disclosure may include a cell unit 200 and a side beam 300.

Meanwhile, in this specification, a first direction D1 may refer to a direction in which a first cell unit 210 faces a second cell unit 220 and/or a direction in which the second cell unit 220 faces the first cell unit 210, a second direction D2 may refer to a direction perpendicular to the first direction D1, and a third direction D3 may refer to a direction perpendicular to the first direction D1 and the second direction D2. In other words, the first direction D1 may be referred to as a front-rear direction, the second direction D2 may be referred to as a left-right direction, and the third direction D3 may be referred to as a top-bottom direction.

The cell unit 200 may include the first cell unit 210 and the second cell unit 220.

The first cell unit 210 may extend in the first direction D1 and include a first battery cell 211 and a first end plate 212.

The first battery cell 211 may be a rechargeable secondary battery including an electrode assembly, an electrolyte solution and a battery case. Specifically, the electrode assembly may include a positive electrode, a negative electrode and a separator interposed between the positive electrode and the negative electrode, and the electrode assembly may be housed in the battery case together with the electrolyte solution.

The first end plate 212 may be coupled to each of two ends of the first battery cell 211 in the first direction D1 to protect the first battery cell 211 from external impact and support the two ends of the first battery cell 211 in the first direction D1.

The second cell unit 220 may be spaced apart from the first cell unit 210 in the first direction D1 and include a second battery cell 221 and a second end plate 222.

The second battery cell 221 may be a rechargeable secondary battery including an electrode assembly, an electrolyte solution and a battery case. Specifically, the electrode assembly may include a positive electrode, a negative electrode and a separator interposed between the positive electrode and the negative electrode, and the electrode assembly may be housed in the battery case together with the electrolyte solution.

The second end plate 222 may be coupled to each of two ends of the second battery cell 221 in the first direction D1 to protect the second battery cell 221 from external impact and support the two ends of the second battery cell 221 in the first direction D1.

The side beam 300 may include a first side beam 310 and a second side beam 320.

The first side beam 310 may cover the end of the first cell unit 210 in the second direction D2.

The first side beam 310 may be coupled to each of two ends of the first end plate 212 in the second direction D2 to cover the ends of the first battery cell 211 in the second direction D2 and reinforce the rigidity of the first end plate 212.

The first side beam 310 may include a first beam member 311 and a first protruding member 312.

The first beam member 311 may be disposed at the end of the first cell unit 210 in the second direction D2.

The first protruding member 312 may extend from the first beam member 311 in the first direction D1.

The second side beam 320 may be coupled to the first side beam 310 and cover the end of the second cell unit 220 in the second direction D2.

The second side beam 320 may be coupled to each of two ends of the second end plate 222 in the second direction D2 to cover the ends of the second battery cell 221 in the second direction D2 and reinforce the rigidity of the second end plate 222.

The second side beam 320 may include a second beam member 321 and a second protruding member 322.

The second beam member 321 may be disposed at the end of the second cell unit 220 in the second direction D2.

The second protruding member 322 may extend from the second beam member 321 in the first direction D1.

At least a part of the first side beam 310 and at least a part of the second side beam 320 may overlap each other in the second direction D2.

The first protruding member 312 and the second protruding member 322 may overlap each other in the second direction D2. This may restrict the movement of the first protruding member 312 and the second protruding member 322 in the second direction D2.

The first side beam 310 may have a first contact surface 313 facing the second side beam 320, and the second side beam 320 may have a second contact surface 323 that contacts the first contact surface 313.

Any one of the first contact surface 313 or the second contact surface 323 may include a heat-resistant material, and the other may include an adhesive material.

For example, the heat-resistant material may include polyetheretherketone (PEEK), polyethersulfone (PES), polyimide, polyamideimide, polyetherimide (PI) or polyphenylenesulfide (PPS).

The adhesive material may be a thermosetting adhesive material that does not melt when heated.

Accordingly, in the event of a fire F in the first battery cell 211, when the nearby first side beam 310 is heated, the heat H may not be transferred to the second side beam 320 connected to the first side beam 310. Alternatively, in the event of the fire F in the second battery cell 221, when the nearby second side beam 320 is heated, the heat H may not be transferred to the first side beam 310 connected to the second side beam 320.

The first contact surface 313 and the second contact surface 323 may be bent at least once. Accordingly, because the gap between the first contact surface 313 and the second contact surface 323 is bent at least once, when the gas G is generated in the event of the fire F in the first battery cell 211 and/or the second battery cell 221, the release of the gas G through the gap may be prevented.

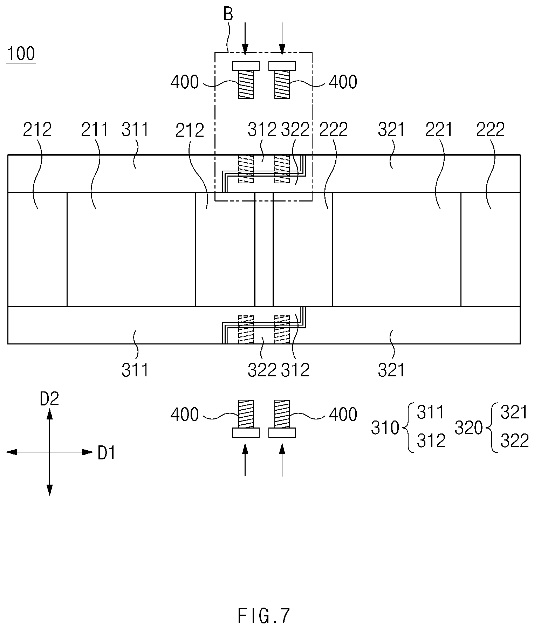

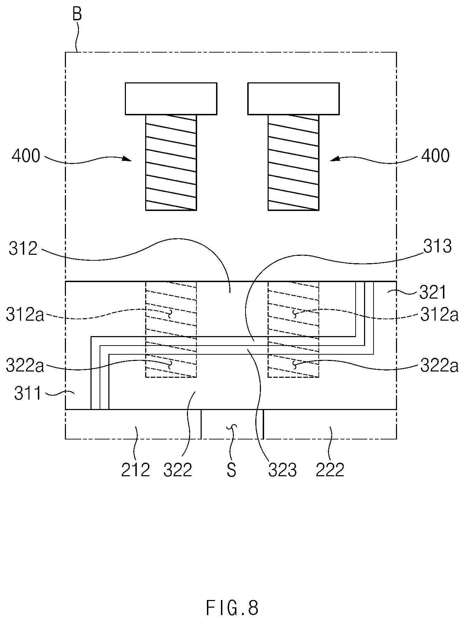

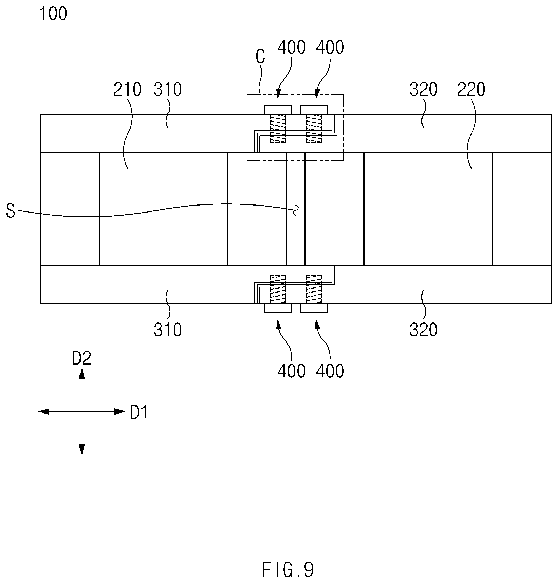

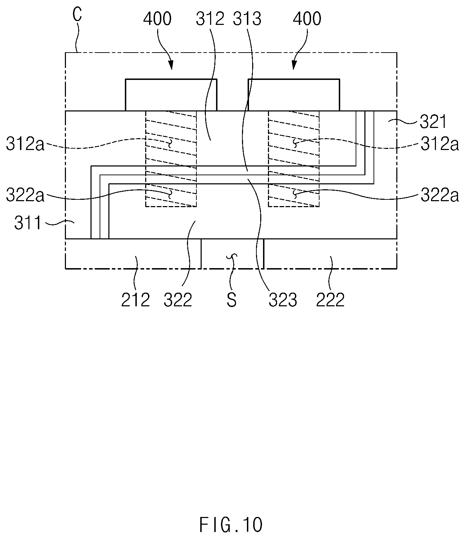

FIG. 7 is a plan view illustrating a coupling process of the first side beam and the second side beam of the battery module according to the present disclosure, FIG. 8 is an enlarged view of section B in FIG. 7, FIG. 9 is a plan view illustrating the fully coupled first and second side beams of the battery module according to the present disclosure, and FIG. 10 is an enlarged view of section C in FIG. 9.

Referring to FIGS. 7 to 10, the first protruding member 312 and the second protruding member 322 may be coupled by bolting.

Any one of the first protruding member 312 or the second protruding member 322 may have a fastening hole 312a through which a bolt 400 passes, and the other may have a fastening groove 322a into which the bolt 400 is inserted.

Specifically, any one protruding member disposed at the outer position in the second direction D2 among the first protruding member 312 and the second protruding member 322 may have the fastening hole 312a, and the other may have the fastening groove 322a.

As an example, as shown in FIG. 8, when the first protruding member 312 is disposed at the outer position in the second direction D2, the first protruding member 312 may have the fastening hole 312a, and the second protruding member 322 may have the fastening groove 322a.

As another example, when the second protruding member 322 is disposed at the outer position in the second direction D2, the second protruding member 322 may have the fastening hole 312a, and the first protruding member 312 may have the fastening groove 322a.

When the bolt 400 is screwed in the fastening hole 312a and the fastening groove 322a, the first protruding member 312 and the second protruding member 322 may be coupled by the bolt 400.

Meanwhile, a direction in which the bolt 400 passes through the fastening hole 312a and a direction in which the bolt 400 is inserted into the fastening groove 322a may be the second direction D2. Accordingly, because the first protruding member 312 and the second protruding member 322 overlap in the second direction D2, the movement of the first protruding member 312 and the second protruding member 322 in the second direction D2 may be restricted, and because the bolt 400 passes and gets inserted in the second direction D2, the movement of the first protruding member 312 and the second protruding member 322 in the first direction D1 may be restricted.

A space S may be formed between the first cell unit 210 and the second cell unit 220. The space S may be surrounded by the first cell unit 210, the second cell unit 220 and the side beam 300. Specifically, the space S may be surrounded by the first end plate 212, the second end plate 222, the first protruding member 312 and the second protruding member 322.

Additionally, the space S may have an open end in the third direction D3, and when the gas G is generated in the event of the fire F in the first battery cell 211 and/or the second battery cell 221, the gas G may be released through the end of the space S in the third direction D3.

An end of the first protruding member 312 or the second protruding member 322 in the first direction D1 covering an end of the space S in the second direction D2 may overlap the second cell unit 220 or the first cell unit 210 in the second direction D2.

Specifically, as shown in FIGS. 7 and 8, the end in the first direction D1 of any one protruding member disposed at the inner position in the second direction D2 among the first protruding member 312 and the second protruding member 322 may overlap the first cell unit 210 or the second cell unit 220 in the second direction D2.

As an example, when the first protruding member 312 covers the space S, the end of the first protruding member 312 in the first direction D1 may overlap the second cell unit 220 in the second direction D2.

As another example, when the second protruding member 322 covers the space S, the end of the second protruding member 322 in the first direction D1 may overlap the first cell unit 210 in the second direction D2.

Accordingly, when the gas G is generated in the event of the fire F in the first battery cell 211 and/or the second battery cell 221, the gas G may be blocked by the first protruding member 312 or the second protruding member 322 covering the space S, thereby preventing gas leakage beyond the side beam 300.

The first side beam 310 and the second side beam 320 may have complementary structures that fit together. For example, the first side beam 310 and the second side beam 320 may have such an L shape that they are interlocked with each other.

Specifically, the first beam member 311 and the second beam member 321 may be arranged side by side in the first direction D1, and the first protruding member 312 and the second protruding member 322 may be arranged side by side in the second direction D2. Through this, each of the first side beam 310 and the second side beam 320 may have an L-shape as a whole, and the movement in the first direction D1 and the second direction D2 may be restricted, thereby achieving more stable coupling.

The end of the first protruding member 312 in the first direction D1 may have a shape that conforms to the end of the second beam member 321 in the first direction D1 facing the first protruding member 312, and the end of the second protruding member 322 in the first direction D1 may have a shape that conforms to the end of the first beam member 311 in the first direction D1 facing the second protruding member 322. In addition, an end of the first protruding member 312 in the second direction D2 may have a shape that conforms to an end of the second protruding member 322 in the second direction D2 facing the first protruding member 312.

Through this, the coupled parts of the first side beam 310 and the second side beam 320 may fit together, thereby achieving more stable coupling.

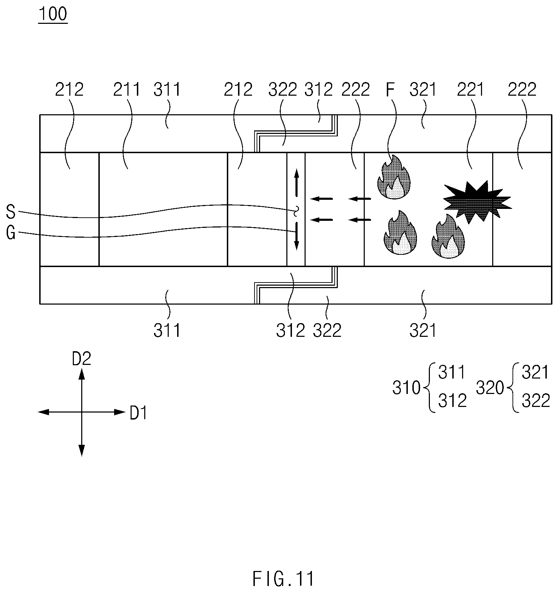

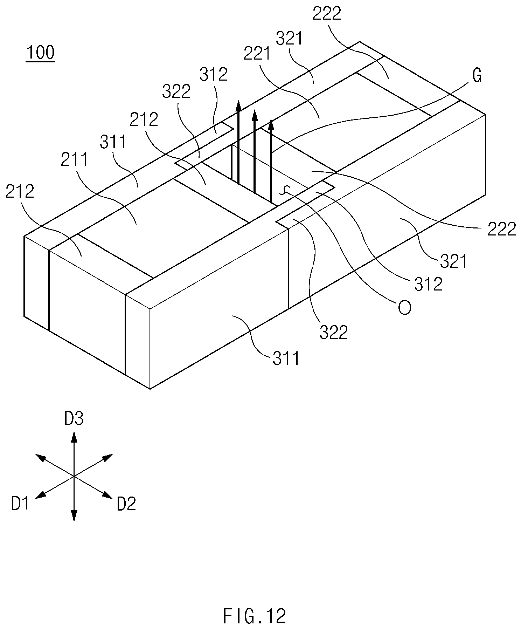

FIG. 11 is a plan view illustrating that the gas from the fire is blocked by the second side beam to prevent the gas from moving when the fire occurs in the second battery cell of the battery module according to the present disclosure, and FIG. 12 is a perspective view illustrating that the gas blocked by the second side beam in FIG. 11 is released through the opening.

Referring to FIGS. 11 and 12, when the fire F occurs in at least one of the first battery cell 211 or the second battery cell 221, the gas G from the fire F may be blocked by the second protruding member 322 and released into the atmosphere through the opening O that is open toward the third direction D3.

Accordingly, the battery module 100 according to the present disclosure may prevent the spread of the gas G to the other battery cell 211, 221 beyond the side beam 300 when the fire F occurs in the battery cell 211, 221.

In addition, as shown in FIG. 12, because the gas G is released through the opening O, in case the gas G is continuously generated from the battery cell 211, 221 where the fire F occurred, it may be possible to prevent the spread of the gas G to the other battery cell 211, 221 separated by the side beam 300.

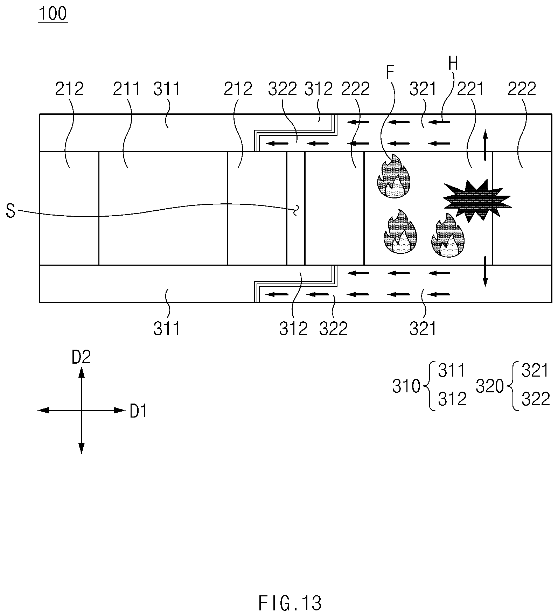

FIG. 13 is a plan view illustrating that the heat transferred from the second battery cell to the second side beam is not transferred to the first side beam by the contact surface including the heat-resistant material when the fire occurs in the second battery cell of the battery module according to the present disclosure.

Referring to FIG. 13, when the fire F occurs in the second battery cell 221, the heat H is transferred from the second battery cell 221 to the second side beam 320, but the transfer of heat to the first side beam 310 is stopped by any one contact surface including the heat-resistant material among the first contact surface 313 and the second contact surface 323.

Accordingly, the battery module 100 according to the present disclosure may prevent the transfer of the heat H between the first side beam 310 and the second side beam 320 when the fire F occurs in the battery cell 211, 221.

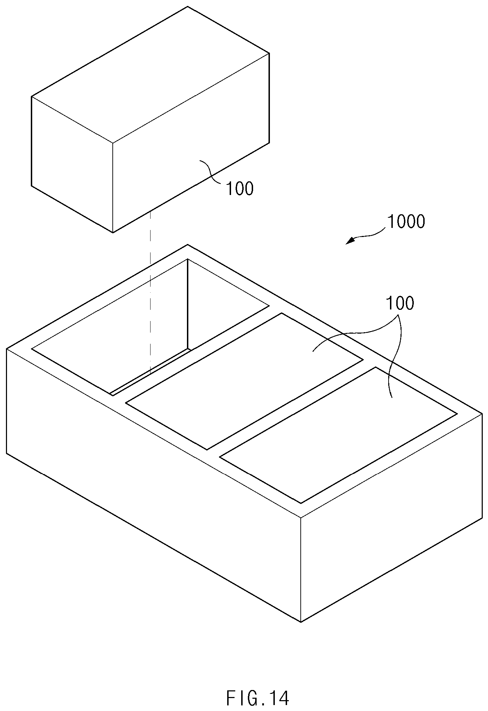

FIG. 14 is a perspective view of a battery pack according to the present disclosure.

Referring to FIG. 14, the battery pack 1000 may include at least one battery modules 100 according to the present disclosure. In addition to the battery module 100, the battery pack 1000 according to the present disclosure may further include any other components, for example, components of the battery pack 1000 well-known at the time of filing the present disclosure, such as a battery management system (BMS), a busbar, a pack case, a relay or a current sensor.

Although the present disclosure has been hereinabove described with regard to a certain number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

100: Battery module
200: Cell unit
210: First cell unit
211: First battery cell
212: First end plate
220: Second cell unit
221: Second battery cell
222: Second end plate
300: Side beam
310: First side beam
311: First beam member
312: First protruding member
312a: Fastening hole
313: First contact surface
320: Second side beam
321: Second beam member
322: Second protruding member
322a: Fastening groove
323: Second contact surface
400: Bolt
1000: Battery pack

## Claims

1. A battery module comprising:
a first cell unit;
a second cell unit spaced apart from the first cell unit in a first direction;
a first side beam covering an end of the first cell unit in a second direction perpendicular to the first direction; and
a second side beam coupled to the first side beam, the second side beam covering an end of the second cell unit in the second direction,
wherein at least a part of the first side beam and at least a part of the second side beam overlap each other in the second direction.

2. The battery module according to claim 1,
wherein the first side beam includes:
a first beam member disposed at the end of the first cell unit in the second direction; and
a first protruding member extending from the first beam member in the first direction,
wherein the second side beam includes:
a second beam member disposed at the end of the second cell unit in the second direction; and
a second protruding member extending from the second beam member in the first direction, and
wherein the first protruding member and the second protruding member overlap each other in the second direction.

3. The battery module according to claim 2,
wherein the first protruding member and the second protruding member are coupled by bolting.

4. The battery module according to claim 3,
wherein any one of the first protruding member or the second protruding member has a fastening hole through which a bolt passes, and the other has a fastening groove into which the bolt is inserted, and
wherein a direction in which the bolt passes and gets inserted is the second direction.

5. The battery module according to claim 2,
wherein a space is formed between the first cell unit and the second cell unit, and
wherein an end of the first protruding member or the second protruding member in the first direction covering the space overlaps the second cell unit or the first cell unit in the second direction.

6. The battery module according to claim 2,
wherein the first side beam and the second side beam have complementary structures that fit together.

7. The battery module according to claim 6,
wherein the end of the first protruding member in the first direction has a shape that conforms to the end of the second beam member in the first direction facing the first protruding member, and
wherein the end of the second protruding member in the first direction has a shape that conforms to the end of the first beam member in the first direction facing the second protruding member.

8. The battery module according to claim 6,
wherein an end of the first protruding member in the second direction has a shape that conforms to an end of the second protruding member in the second direction facing the first protruding member.

9. The battery module according to claim 2,
wherein the first beam member and the second beam member are arranged side by side in the first direction, and
wherein the first protruding member and the second protruding member are arranged side by side in the second direction.

10. The battery module according to claim 1,
wherein the first side beam and the second side beam are L-shaped.

11. The battery module according to claim 1,
wherein the first side beam has a first contact surface facing the second side beam,
wherein the second side beam has a second contact surface that contacts the first contact surface, and
wherein any one of the first contact surface or the second contact surface includes a heat-resistant material, and the other includes an adhesive material.

12. The battery module according to claim 11,
wherein the first contact surface and the second contact surface are bent at least once.

13. The battery module according to claim 1,
wherein the first cell unit includes:
a first battery cell; and
a first end plate coupled to each of two ends of the first battery cell in the first direction, and
wherein the first side beam is coupled to each of two ends of the first end plate in the second direction.

14. The battery module according to claim 1,
wherein the second cell unit includes:
a second battery cell; and
a second end plate coupled to each of two ends of the second battery cell in the first direction, and
wherein the second side beam is coupled to each of two ends of the second end plate in the second direction.

15. A battery pack comprising the battery module according to any one of claims 1 to 14.
